# EUROPEAN PATENT SPECIFICATION

(11) **EP 4 453 087 B1**
(45) Date of publication and mention of the grant of the patent: **21.10.2026**
(21) Application number: 22830821.9
(22) Date of filing: 07.12.2022
(51) Int. Cl.: C08L 23/10, C08F 210/06

(54) **COMPOSITIONS OBTAINED FROM RECYCLED POLYOLEFINS**
AUS RECYCELTEN POLYOLEFINEN ERHALTENE ZUSAMMENSETZUNGEN
COMPOSITIONS OBTENUES À PARTIR DE POLYOLÉFINES RECYCLÉES

(30) Priority: 22.12.2021 EP 21216708
(43) Date of publication of application: 30.10.2024
(73) Proprietor: Basell Poliolefine Italia S.r.l., 20121 Milano (IT)
(72) Inventor: CAVALIERI, Claudio, 44122 Ferrara (IT); GALVAN, Monica, 44122 Ferrara (IT)
(74) Representative: LyondellBasell
(86) International application number: PCT/EP2022/084747
(87) International publication number: WO 2023/117423

(56) References cited:
- EP-A1- 3 165 473
- WO-A1-2015/169690
- WO-A1-2019/091887

## Description

### FIELD OF THE INVENTION

The present disclosure relates to compositions obtained comprising recycled polyolefins and a polypropylene based composition as a compatibilizer.

### BACKGROUND OF THE INVENTION

Polyolefins, in particular polyethylene and polypropylene, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes, mainly constituted of flexible packaging (cast film, blown film and BOPP film), rigid packaging, blow moulded bottles and injection moulded containers. Through a step of separation from other polymers, such as PVC, PET or PS, two main polyolefinic fractions are obtained, namely polyethylenes (in particular HDPE LDPE, LLDPE) and polypropylenes (homopolymers, random copolymers, heterophasic copolymers).

One of the key problems in polyolefin recycling, especially when dealing with material streams from post-consumer waste (PCW) is the difficulty to quantitatively separate polypropylene (PP) and polyethylene (PE). Commercial recyclates from PCW sources have been found to generally contain mixtures of PP and PE, the minor component reaching up to < 50 wt%.

Such recycled PP/PE-blends normally suffer from deteriorated mechanical and optical properties, have poor performance in odour and taste and they generally suffer from poor compatibility between the main polymer phases, resulting in both limited impact strength and heat deflection resistance. Such inferior performance is partly caused by PE with its lower stiffness and melting point forming the continuous phase even at PP concentrations up to 65% because of the normally higher viscosity of the PE components in PCW.

These drawbacks normally exclude the application for high quality parts, and it only allows the use in low-cost and non-demanding applications.

Some research has been done to improve the compatibility between PP and PE.

WO2019/091886 A1 discloses a method of using heterophasic polypropylene compositions or a random ethylene-propylene copolymers (EP-RACO) as compatibilizer for the recycling plastic blends. The heterophasic copolymer compositions seems less promising in terms of compatibilization performances.

WO2019 091887 A1 describes polyolefin compositions suitable for films comprising a (recycled) propylene-based polymer, a (recycled) ethylene-based polymer and as compatibilizer an heterophasic propylene ethylene copolymer.

WO 2015 169690 A1 teaches PP-PE blends which contain a specific kind of compatibilizer having good stiffness, impact strength and heat deflection resistance.

EP 3165473 A1 describes PP/PE compositions comprising a specific compatibilizer and flow enhancer suitable for packaging applications.

It has now been found that a composition comprising a specifically tailored heterophasic polypropylene composition can be used as compatibilizer for recycled PE/PP compositions allowing better properties especially for the production of films.

### SUMMARY OF THE INVENTION

The present disclosure relates to polyolefin compositions comprising:
(A) 60-95wt%, of a polyolefin component containing:
   - (a1) from 20 wt% to 80 wt% of a propylene based polymer having a propylene content higher than 60 wt%
   - (a2) from 20 wt% to 80 wt% of an ethylene based polymer having an ethylene content higher than 70%wt;
(B) 5-40 wt% of a polypropylene composition polypropylene composition comprising:
   - (b1) from 35 to 65% by weight, preferably from 40 to 60% by weight of a polymer fraction comprising a propylene homopolymer, or a copolymer of propylene with one or more comonomers selected from ethylene and a CH₂=CHR alpha-olefin, where R is a C₂-C₈ alkyl radical, or mixtures thereof; said copolymers containing at least 85% by weight of units derived from propylene, and
   - (b2) from 35 to 65% by weight, preferably from 40 to 60% by weight of a polymer fraction comprising a copolymer of ethylene with comonomers selected from propylene and/or CH₂=CHR alpha-olefins, where R is a C₂-C₈ alkyl radical, said copolymer containing units derived from ethylene in an amount ranging from 25 to 40% by weight, preferably from 28 to 35% by weight, said polypropylene composition (B) being further characterized by
   - a Melt Flow Rate (ISO 1133 230°C/2.16 kg)ranging from 0.1 to 5 g/10min, preferably from 0.2 to 2.5 g/10min;
   - an amount of fraction soluble in xylene at room temperature (25°C) ranging from 35 to 60% by weight, preferably from 40 to 55% by weight, said fraction having an intrinsic viscosity measured in tetrahydronaphthalene at 135 °C, ranging from 3.0 to 7.5, preferably from 4.0 to 6.5 dl/g; and,
   - a total content of ethylene measured according to ¹³C-NMR method described in the specification, ranging from 10 to 25% by weight, preferably from 13 to 23% by weight,;
      in the said composition the sum of a1) and a2), being referred to the total weight of a1) and a2), is 100, the sum of b1) and b2), being referred to the total weight of b1) and b2), is 100, and the sum of the amounts of (A) and (B) being referred to the total weight of (A) and (B) is 100.

### DETAILED DESCRIPTION OF THE INVENTION

The term "copolymer" as used herein refers to both polymers with two different recurring units and polymers with more than two different recurring units, such as terpolymers, in the chain. By "ambient or room temperature" is meant therein a temperature of about 25 °C.

The term "consisting essentially of", as used herein in connection with a polymer or polymer composition means that, in addition to those components which are mandatory, other components may also be present in the polymer or in the polymer composition, provided that the essential characteristics of the polymer or of the composition are not materially affected by their presence. According to the present disclosure, examples of components that, when present in customary amounts in a polymer or in a polymer composition, do not materially affect their characteristics are the catalyst residues, antistatic agents, melt stabilizers, light stabilizers, antioxidants, antiacids.

The features of the components forming the polypropylene composition are not inextricably linked to each other. This means that a certain level of preference of one the features should not necessarily involve the same level of preference of the remaining features of the same or different components. On the contrary, it is intended in the present disclosure that any component or sub-components (A) to (B) and any preferred range of features of components (A) to (B) can be combined with any preferred range of one or more of the features of components (A) to (B) and with any possible additional component, and its features, described in the present disclosure.

Preferably, component (A) is used in amount ranging from 65 to 95 wt%, more preferably 75 to 95 wt%; especially from 80 to 95 wt% based on the sum of (A) and (B).

Preferably component (B) is used in amount ranging from 5 to 35 wt%, more preferably from 5 to 25 wt%; especially from 5 to 20 wt% based on the sum of (A) and (B).

Preferably, the amount of component a1) ranges from 30 wt% to 70 wt% preferably from 40 wt % to 60 wt% more preferably from 45 wt% to 55 wt% based on the sum of a1)+a2). Preferably, it is selected from a propylene based polymer having a propylene content higher than higher than 70 wt%; more preferably higher than 80 wt% and even more preferably higher from 90 to 100wt%;

Preferably, the amount of component (a2) ranges from 30 wt% to 70 wt% preferably from 40 wt % to 60 wt% more preferably from 45 wt% to 55 wt% based on the sum of a1)+a2). Preferably, it is selected from ethylene based polymers having an ethylene content higher than 70 preferably higher than 75 wt%; more preferably higher than 80 wt% even more preferably from 90 wt% to 100%.

Component (A) preferably origins from of a waste material containing not less than 80% by weight, typically not less than 90% by weight, in particular from 80% or 90% up to 99% by weight, with respect to the total weight of the component, of polyethylene or polypropylene or their mixtures. The term "waste" is used to designate polymer materials deriving from at least one cycle of processing into manufactured articles, as opposed to virgin polymers. comprises a mixture of recycled polypropylene and polyethylene blend as main components.

As previously mentioned, all kinds of polyethylene or polypropylene can be present. In particular, the polyethylene fraction can comprise one or more materials selected from high density polyethylene (HDPE), low density polyethylene (LDPE), linear low density polyethylene (LLDPE).

The polypropylene fraction can comprise one or more polymer materials selected from the following:
I) isotactic or mainly isotactic propylene homopolymers;
II) random copolymers of propylene with ethylene and/or C4-C8 α-olefins, such as for example 1-butene, 1-hexene, 1-octene, 4-methyl-1-pentene, wherein the total comonomer content ranges from 0.05% to 20% by weight, or mixtures of said copolymers with isotactic or mainly isotactic propylene homopolymers;
III) heterophasic copolymers comprising a propylene homopolymer and/or one of the copolymers of item II), and an elastomeric fraction comprising copolymers of ethylene with propylene and/or a C4-C8 α-olefin, optionally containing minor amounts of a diene, such as butadiene, 1,4-hexadiene, 1,5-hexadiene, ethylidene-1-norbornene.

Other polymeric materials typically present as impurities in component (A) are polystyrene, ethylene vinyl acetate copolymers, polyethylene terephthalate.

Other impurities that can be present in component (A) are metals (in particular Al) and additives, like fillers and pigments.

Component (B) is preferably present in an amount ranging from 5 to 35 wt% preferably 5-25 wt%; more preferably from 5 wt% to 20 wt% based on the sum of (A+B).

Component (b1) is preferably selected from a propylene homopolymer or a propylene ethylene copolymer containing from 0.1 to 6.0% by weight, preferably from 0.5 to 5.0%by weight of ethylene.

Component (b2) is preferably selected from a copolymer of ethylene and propylene containing units derived from ethylene in an amount ranging from 25 to 40% by weight, preferably from 28 to 35% by weight.

As mentioned above, the polypropylene composition (B) is also characterized by
- a Melt Flow Rate (ISO 1133 230°C/2.16 kg) ranging from 0.1 to 5 g/10min, preferably from 0.2 to 2.5 g/10min and more preferably from 0.3 to 2.0 g/10min;
- an amount of fraction soluble in xylene at room temperature (25°C) ranging from 35 to 60% by weight, preferably from 40 to 55% by weight, more preferably from 45 to 55% by weight, said fraction having an intrinsic viscosity measured in tetrahydronaphthalene at 135°C, ranging from 3.0 to 7.5, preferably from 4.0 to 6.5 dl/g, more preferably from 4.5 to 6.5 dl/g; and,
- a total content of ethylene measured according to NMR method described in the specification, ranging from 10 to 25% by weight, preferably from 13 to 23% by weight and more preferably from 15 to 23%by weight.

The Melt Flow Rate (ISO 1133 230°C/2.16 kg) of the whole polyolefin composition may range from 0.5 to 30 g/10min preferably from 0.5 to 20 g/10min and especially from 0.5 to 15 g/10min.

The polyolefin composition of the present disclosure offer an excellent compatibilization between the polyethylene and polypropylene portions of component (A) so that its mechanical properties and the appearance of the manufactured articles make them useful for a wide range of application and especially for the production of films, including cast, blown and bioriented films mono or multilayer with a reduction of gels number in the films.

In particular, the polyolefin composition of the present disclosure offer an excellent balance between elastic modulus and Charpy resistance at 23°C especially when the components (a1) and (a2) are of a plastic waste origin. For compositions in which the fraction (a2) is greater than (a1) the elastic modulus is equal to, or higher than 850 N/mm² and the ratio between the value of elastic modulus and the Charpy resistance at 23°C is lower than 12. If an inorganic additive like talc is added the elastic modulus is equal to, or higher than 950 N/mm² and the ratio between the value of elastic modulus and the Charpy resistance at 23°C is lower than 15.

For compositions in which the fraction (a1) is greater than (a2) the elastic modulus is equal to, or higher than 950 N/mm² and the ratio between the value of elastic modulus and the Charpy resistance at 23°C is lower than 65.

The polypropylene composition (B) may be prepared by polymerization in sequential polymerization stages, with each subsequent polymerization being conducted in the presence of the polymeric material formed in the immediately preceding polymerization reaction. The polymerization stages may be carried out in the presence of a Ziegler-Natta catalyst. According to a preferred embodiment, all the polymerization stages are carried out in the presence of a catalyst comprising the product of the reaction between:
i) a solid catalyst component comprising Ti, Mg, Cl, and at least an internal electron donor compound;
ii) an alkylaluminum compound and,
iii) an external electron-donor compound having the general formula:
   (R⁷)a(R⁸)bSi(OR⁹)c, where a and b are integers from 0 to 2, c is an integer from 1 to 4 and the sum (a+b+c) is 4; R⁷, R⁸, and R⁹, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters, such as diisobutyl, dioctyl and diphenyl phthalate and benzyl-butyl phthalate.

The particles of solid component (i) may have substantially spherical morphology and average diameter ranging between 5 and 150 µm, preferably from 20 to 100 µm, and more preferably from 30 to 90 µm. As particles having substantially spherical morphology, those are meant wherein the ratio between the greater axis and the smaller axis is equal to or lower than 1.5 and preferably lower than 1.3.

According to one method, the solid catalyst component (i) can be prepared by reacting a titanium compound of formula Ti(OR)q-yXy, where q is the valence of titanium and y is a number between 1 and q, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold TiCl₄; the mixture is heated up to 80-130°C and kept at this temperature for 0.5-2 hours. The treatment with TiCl₄ can be carried out one or more times. The electron donor compound can be added in the desired ratios during the treatment with TiCl₄.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R⁷ and R⁸ is selected from branched alkyl, cycloalkyl or aryl groups with 3-10 carbon atoms optionally containing heteroatoms and R⁹ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R⁸ is a branched alkyl or cycloalkyl group, optionally containing heteroatoms, and R⁹ is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

Examples of polymerization processes for the preparation of said compositions can be found in EP-A-472946, the relevant part of which is incorporated herein by reference.

Preferably, all the polymerization stages preferably occur in gas phase. The reaction temperature in the polymerization stage for the preparation of the polymer fraction (b1) and in the preparation of the copolymer fraction (b2) can be the same or different, and is preferably from 40°C to 90°C; more preferably, the reaction temperature ranges from 50 to 80°C in the preparation of the fraction (b1), and from 40 to 80°C for the preparation of components (b2). The pressure of the polymerization stages to prepare the fractions (b1) and (b2), is from 5 to 30 bar in gas phase. The residence times relative to the two stages depend on the desired ratio between the fractions (b1) and (b2), and can usually range from 15 minutes to 8 hours. Conventional molecular weight regulators known in the art, such as chain transfer agents (e.g. hydrogen or ZnEt₂), may be used.

If needed, the final composition (B) can be subject to a chemical treatment with organic peroxides in order to lower the average molecular weight and increase the melt flow index up to the value needed for the specific application.

In addition, the final composition (B) can be subjected to a grafting process in the presence of polar monomers such as maleic anhydride, in order to make it more compatible with polymers containing substantial amount of polar monomers that can be present as minor components in the composition (A) when it origins from plastic waste material.

The whole propylene composition of the present disclosure can be obtained by mechanical blending of the components (A) and (B) according to conventional techniques.

According to a preferred method of preparation, component (B) is mechanically blended with a preformed polypropylene composition (A) comprising the components (a) and (b) associated together by means of the already disclosed a sequential copolymerization process.

The final composition comprising the components (A) and (B) may be added with conventional additives, fillers and pigments, commonly used in olefin polymers such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents may be added to the compositions of the present disclosure in quantities ranging from 0.05 to 2% by weight, more preferably from 0.1 to 1% by weight, with respect to the total weight, for example.

The following examples are given in order to illustrate, but not limit the present disclosure.

### EXAMPLES

### CHARACTERIZATIONS

### Xylene-soluble (XS) Fraction at 25 °C

Solubility in xylene: Determined as follows:
2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80°C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%);

### Melt Flow Rate (MFR)

Measured according to ISO 1133 at 230 °C with a load of 2.16 kg, unless otherwise specified.

### Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ η ].

### Ethylene (C2) content

### ¹³C NMR of propylene/ethylene copolymers

¹³C NMR spectra were acquired on a Bruker AV-600 spectrometer equipped with cryoprobe, operating at 160.91 MHz in the Fourier transform mode at 120°C.

The peak of the S_{ββ} carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules 1982, 15, 4, 1150-1152) using the following equations:

| | | |
|---|---|---|
| PPP = 100 T_{ββ}/S | PPE = 100 T_{βδ}/S | EPE = 100 T_{δδ}/S |
| PEP = 100 S_{ββ}/S | PEE= 100 S_{βδ}/S | EEE = 100 (0.25 S_{γδ}+0.5 S_{δδ})/S |
| S = T_{ββ} + T_{βδ} + T_{δδ} + S_{ββ} + S_{βδ} + 0.25 S_{yδ} + 0.5 S_{δδ} | | |

The molar percentage of ethylene content was evaluated using the following equation:
E% mol = 100 * [PEP+PEE+EEE]The weight percentage of ethylene content was evaluated using the following equation: $E % wt . = \frac{100 * E % mol * {MW}_{E}}{E % mol * {MW}_{E} + P % mol * {MW}_{P}}$
where P% mol is the molar percentage of propylene content, while MW_{E} and MW_{P} are the molecular weights of ethylene and propylene, respectively.

The product of reactivity ratio *r*₁*r*₂ was calculated according to Carman (C.J. Carman, R.A. Harrington and C.E. Wilkes, Macromolecules, 1977; 10, 536) as: ${r}_{1} {r}_{2} = 1 + \left(\frac{EEE + PEE}{PEP}+1\right) - \left(\frac{P}{E}+1\right) {\left(\frac{EEE + PEE}{PEP}+1\right)}^{0.5}$

The tacticity of Propylene sequences was calculated as mm content from the ratio of the PPP mmT_{ββ} (28.90-29.65 ppm) and the whole T_{ββ} (29.80-28.37 ppm).

### Samples for the mechanical tests

Samples have been obtained according to ISO 1873-2:2007.
**Charpy impact test** is determined according to ISO 179-1eA, and ISO 1873-2
**Elongation at yield:** measured according to ISO 527.
**Elongation at break:** measured according To ISO 527
**Stress at break:** measured according to ISO 527.
**Tensile Modulus** according to ISO 527-2,

**Tear Resistance** according to the method ASTM D 1004 on 1mm-thick extruded sheets. Crosshead speed: 51 mm/min; V-shaped die cut specimen.

**Shore D** on injection molded, compression molded plaques and extruded sheets according to the method ISO 868 (15 sec)

### Melting point and crystallization point

The melting point has been measured by using a DSC instrument according to ISO 11357-3, at scanning rate of 20C/min both in cooling and heating, on a sample of weight between 5 and 7 mg., under inert N₂ flow. Instrument calibration made with Indium.

### EXAMPLES

### Preparation of components (B)

### Catalyst system and prepolymerization:

Before introducing it into the polymerization reactors, the solid catalyst component (**ZN107**) described above was contacted at 30 °C for 9 minutes with aluminum triethyl (TEAL) and dicyclopentyldimethoxysilane (DCPMS) at a TEAL/DCPMS weight ratio of about 15 and in such a quantity that the TEAL/solid catalyst component weight ratio was about 4.

The catalyst system was then subjected to prepolymerization by maintaining it in a liquid propylene suspension at 50 °C for about 75 minutes before introducing it into the first polymerization reactor.

### Polymerization

The polymerization was carried out in continuous mode in a series of three gas-phase reactors equipped with devices to transfer the product from the first reactor to the second one. A propylene-based polymer (A) was produced in the first gas phase polymerization reactor by feeding the prepolymerized catalyst system, hydrogen the molecular weight regulator) and propylene, all in the gas state, in a continuous and constant flow. The propylene-based polymer (A) coming from the first reactor was discharged in a continuous flow and, after having been purged of unreacted monomers, was introduced, in a continuous flow, into the second gas phase reactor, together with quantitatively constant flows of hydrogen and ethylene, all in the gas state. In the second reactor a copolymer of ethylene (B) was produced. The product coming from the second reactor was discharged in a continuous flow and, after having been purged of unreacted monomers, is introduced, in a continuous flow, into the third gas phase reactor, together with quantitatively constant flows of hydrogen, ethylene and propylene, all in the gas state. In the third reactor an ethylene-propylene polymer (C) was produced. Polymerization conditions, molar ratio of the reactants and compositions of the resulting copolymers are shown in Table 1. The polymer particles exiting the third reactor were subjected to a steam treatment to remove the reactive monomers and volatile substances and then dried. Thereafter the polymer particles were mixed with a stabilizing additive composition in a twin screw extruder Berstorff ZE 25 (length/diameter ratio of screws: 34) and extruded under a nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition comprised the following components:
- 0.1% by weight of Irganox^{®} 1010;
- 0.1% by weight of Irgafos^{®} 168; and
- 0.04% by weight of DHT-4A (hydrotalcite);
where all percentage amounts refer to the total weight of the polymer and stabilizing additive composition.

Irganox^{®} 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, and Irgafos^{®} 168 is tris(2,4-di-tert.-butylphenyl)phosphite. The characteristics of the polymer composition, reported in Table 2, are obtained from measurements carried out on the extruded polymer, which constitutes the stabilized ethylene polymer composition according to certain embodiments disclosed herein.

**Table 1 - Polymerization conditions**

| Example | | 1 | 2 |
|---|---|---|---|
| 1^{st} Reactor - component (b1) | | | |
| Temperature | °C | 75 | 75 |
| Pressure | barg | 18 | 18 |
| H₂/C₃- | mol. | 0.036 | 0.034 |
| Split | wt% | 48 | 47 |
| MFR of (b1) | g/10 min | 32 | nd |

| 2^{nd} Reactor - component (b2) | | | |
|---|---|---|---|
| Temperature | °C | 65 | 65 |
| Pressure | barg | 15 | 15 |
| H₂/C₂- | mol. | 0.013 | 0.009 |
| C₂-/(C₂- + C₃-) | mol. | 0.207 | 0.204 |
| Split | wt% | 52 | 53 |
| C₂- content of B | wt% | 34 | 34 |
| Xylene soluble of (b1+b2) | wt% | 48 | 49 |
| Xylene soluble IV | dl/g | 4.96 | 5.54 |
| MFR of (b1+b2) | g/10 min. | 0.8 | 0.7 |

### Examples 1 and comparative examples 1-3

In this series of examples a mixture of recycled PE (QCP5603) and recycled PP (QCP 300P) in variable ratios, are introduced in an extruder (Berstorff extruder), wherein they are mixed with 10% (based on the total amount of polyolefins) of a heterophasic composition used as compatibilizer and 1000 ppm of M.S. 168 as an additive. The polymer particles are extruded under nitrogen atmosphere in a twin screw extruder, at a rotation speed of 250 rpm and a melt temperature of 200-250° C. The characterization of the obtained composition is reported in table 2.

Compatibilizers used are:
B1- Component B produced in run 1
B2 Component B produced in run 2
CC1- comparative compatibilizer produced according to Example 1 of WO2020/182436
CC2 comparative compatibilizer produced according to Example 1 of WO03/011962 after visbreaking at 15g/10min.

**Table 2**

| | | CE 1 | CE 2 | Example 1 | CE3 |
|---|---|---|---|---|---|
| | Composition | **30% QCP300P** | **30% QCP300P** | **30% QCP300P** | **30% QCP300P** |
| | | 70% QCP5603 | 60%QCP5603 | 60%QCP5603 | 60%QCP5603 |
| | | | 10% CC1 | 10% B1 | 10% CC2 |
| | Units | | | | |
| Melt Flow Rate | g/10min | 1.85 | 2 | 2.07 | 3.33 |
| Elastic Modulus | N/mm² | 1030 | 880 | 910 | 850 |
| RES.CHARPY 23°C | KJ/m² | 29.5 | 71.3 | 82.4 | 60 |
| RES.CHARPY 0°C | KJ/ m² | 5.2 | 31.7 | 49.2 | 7.3 |
| RES.CHARPY - 20°C | KJ/ m² | 3.7 | 4.8 | 5.4 | 3.9 |
| Load at yield | N/ mm² | 24.8 | 21.5 | 21.8 | 21 |
| Elongation at yield | % | 10.9 | 13 | 12.7 | 13.1 |
| Load at break | N/ mm² | 16.2 | 17.2 | 16.6 | 15.8 |
| Elongation at break | % | 150 | 590 | 430 | 500 |

### Example 2 and comparative examples 4-5

In this series of examples the same approach disclosed in example 1 and comparative examples 1-3 was followed with the difference that talc was added as a further component. The characterization of the obtained composition is reported in table 3.

**Table 3**

| | | CE 4 | Example 2 | CE5 |
|---|---|---|---|---|
| | Composition | **30% QCP300P** | **30% QCP300P** | **30% QCP300P** |
| | | 56%QCP5603 | 56%QCP5603 | 56%QCP5603 |
| | | 10% CC1 | 10% B1 | 10% CC2 |
| | | 4% talc | 4% talc | 4% talc |
| | Units | | | |
| Melt Flow Rate | g/10min | 2.33 | 2.05 | 3.42 |
| Elastic Modulus | N/mm² | 980 | 1050 | 980 |
| RES. CHARPY 23°C | KJ/m² | 62.3 | 76.3 | 39.6 |
| RES. CHARPY 0°C | KJ/ m² | 18.6 | 29.7 | 5.6 |
| RES. CHARPY -20°C | KJ/ m² | 4.8 | 5.1 | 3.7 |
| Load at yield | N/ mm² | 22 | 22.1 | 21.6 |
| Elongation at yield | % | 12.1 | 12.3 | 12.1 |
| Load at break | N/ mm² | 14.5 | 17.3 | 14.7 |
| Elongation at break | % | 370 | 540 | 220 |

### Example 3 and comparative examples 6-8

In this series of examples the same approach disclosed in example 1 and comparative examples 1-3 was followed with the difference that the relative amount of recycled PE (QCP5603) and recycled PP (QCP 300P) was varied. The characterization of the obtained composition is reported in table 4.

**Table 4**

| | | CE 6 | CE 7 | Example 3 | CE8 |
|---|---|---|---|---|---|
| | Composition | **70% QCP300P** | **60% QCP300P** | **60% QCP300P** | **60% QCP300P** |
| | | 30% QCP5603 | 30%QCP5603 | 30%QCP5603 | 30%QCP5603 |
| | | | 10% CC1 | 10% B1 | 10% CC2 |
| | Units | | | | |
| Melt Flow Rate | g/10min | 7.74 | 6.16 | 5.19 | 7.8 |
| Elastic Modulus | N/mm² | 1190 | 1010 | 1010 | 960 |
| RES.CHARPY 23°C | KJ/m² | 8 | 12.6 | 15.7 | 13.8 |
| RES.CHARPY 0°C | KJ/ m² | 4.1 | 7.1 | 7.7 | 6.8 |
| RES.CHARPY - 20°C | KJ/ m² | 2.4 | 3.9 | 4.1 | 3.3 |
| Load at yield | N/ mm² | 25.8 | 22.9 | 23 | 22.1 |
| Elongation at yield | % | 10.5 | 11.9 | 11.7 | 12.6 |
| Load at break | N/ mm² | 15.9 | 14.7 | 15.5 | 15.3 |
| Elongation at break | % | 77.8 | 300 | 430 | 180 |

### Example 4-5 and comparative examples 9-10

In this series of examples the same approach disclosed in example 1 and comparative examples 1-3 was followed. With the difference that a blend (A) of 50 wt% of Hostalen GF 9055 F a virgin commercial high density polyethylene sold by LyondellBasell and 50 wt% of Moplen HP561R a virgin polypropylene homopolymer sold by LyondellBasell was prepared. The characterization of the obtained composition is reported in table 5.

Moreover, a cast film was obtained from the above composition was tested and characterized. The results are reported in table 6.

The gels count test has been carried out on a cast film Collin Extrusion line diameter with a 25 mm single screw with the following features:
Single screw L/D 25
Temperature profile
Cylinders 200 (close to the hopper) -> 230°C (at the end of the extruder, before the inlet to the die)
Die 240°C
Die width 150 mm
Chill roll 30°C
Film speed 3.0 m/min
Film thickness 50 micron
Inspected area 1 m²
OCS FS5 gel count unit on a 4 cm wide stripe
The elongation at break of cast films have been measured, in machine direction (MD) and transversal direction (TD) according to ASTM D 882.

**Table 5**

| | | Example 4 | Example 5 | CE9 | CE10 |
|---|---|---|---|---|---|
| | Composition | **85% A** | **95% A** | **85% A** | **95% A** |
| | | 15% B2 | 5% B2 | 15% CC3 | 5% CC3 |
| | | | | | |
| | Units | | | | |
| Melt Flow Rate | g/10min | 5.1 | 6.61 | 5.61 | 6.68 |
| RES.CHARPY 23°C | N/mm² | 59.5 | 7.6 | 11.6 | 6.4 |
| RES.CHARPY 0°C | KJ/m² | 6.7 | 3.5 | 4.4 | 3.4 |
| RES.CHARPY - 20°C | KJ/m² | 3.9 | 2.3 | 3.5 | 2.5 |
| Elastic Modulus | KJ/m² | 1000 | 1140 | 1120 | 1180 |
| Load at yield | N/ mm² | 23.8 | 26.5 | 26.4 | 27.4 |
| Elongation at yield | % | 12.3 | 10.7 | 11 | 10.3 |
| Load at break | N/ mm² | 17.1 | 16.4 | 17.9 | 2.5 |
| Elongation at break | % | 620 | 520 | 600 | 350 |

CC3 is a heterophasic TPO (thermoplastic polyolefin) polypropylene grade having a total ethylene content of 11.0 wt%; a fraction soluble in xylene at 25°C of 29 wt%. The intrinsic viscosity of the fraction soluble in xylene at 25°C is 6.8 dl/g and the MFR is 1.7 g/10 min. It has been obtained by following the process set-up and similar conditions disclosed in examples 1-4 of WO2004/08705.

**Table 6**

| | | Example 4 | Example 5 | CE9 | CE10 |
|---|---|---|---|---|---|
| Load at Yield MD | MPa | 21.6 | 23.8 | 22.6 | 23.7 |
| Elongation at yield MD | % | 13.1 | 11.4 | 11.4 | 11.4 |
| Load at break MD | MPa | 47.8 | 47.8 | 47 | 44.1 |
| Elongation at Break MD | % | 1106 | 1133 | 1071 | 1076 |
| Load at Yield TD | MPa | 19.2 | 23.6 | 19.1 | 22.5 |
| Elongation at yield TD | % | 7.8 | 6.4 | 6.3 | 6.3 |
| Load at break TD | MPa | 31.9 | 33.7 | 31.1 | 33.6 |
| Elongation at Break TD | % | 991 | 1010 | 1005 | 977 |
| Elmendorf MD | gf | 148 | 63 | 90 | 51 |
| Pendulum Weight | | 400 g | 400 g | 200 g | 400 g |
| Thickness | micron | 50 | 50 | 50 | 50 |
| Elmendorf TD | gf | 87 | 66 | 90 | 66 |
| Pendulum Weight | | 400 g | 400 g | 200 g | 400 g |
| Thickness | micron | 50 | 50 | 50 | 50 |
| Gels diam. 0.5 - 0.7 mm | nr/m² | 0 | 0 | 0 | 2 |
| Gels diam. > 0.2mm | nr/m² | 16 | 8 | 440 | 150 |
| Gels diam. > 0.1mm | nr/m² | 170 | 80 | 2690 | 950 |

## Claims

1. A polyolefin compositions comprising:
(A) 60-95wt%, of a polyolefin component containing:
- (a1) from 20 wt% to 80 wt% of a propylene based polymer having a propylene content higher than 60 wt%
- (a2) from 20 wt% to 80 wt% of an ethylene based polymer having an ethylene content higher than 70%wt;
(B) 5-40 wt% of a polypropylene composition polypropylene composition comprising:
- (b1) from 35 to 65% by weight, preferably from 40 to 60% by weight of a polymer fraction comprising a propylene homopolymer, or a copolymer of propylene with one or more comonomers selected from ethylene and a CH₂=CHR alpha-olefin, where R is a C₂-C₈ alkyl radical, or mixtures thereof; said copolymers containing at least 85% by weight of units derived from propylene, and
- (b2) from 35 to 65% by weight, preferably from 40 to 60% by weight of a polymer fraction comprising a copolymer of ethylene with comonomers selected from propylene and CH₂=CHR alpha-olefins, where R is a C₂-C₈ alkyl radical, said copolymer containing units derived from ethylene in an amount ranging from 25 to 40% by weight, preferably from 28 to 35% by weight, said polypropylene composition (B) being further **characterized by**
- a Melt Flow Rate (ISO 1133 230°C/2.16 kg)ranging from 0.1 to 5 g/10min, preferably from 0.2 to 2.5 g/10min;
- an amount of fraction soluble in xylene at room temperature (25°C) ranging from 35 to 60% by weight, preferably from 40 to 55% by weight, said fraction having an intrinsic viscosity measured in tetrahydronaphthalene at 135 °C, ranging from 3.0 to 7.5, preferably from 4.0 to 6.5 dl/g; and,
- a total content of ethylene measured according to ¹³C-NMR method described in the specification, ranging from 10 to 25% by weight, preferably from 13 to 23% by weight,; in the said composition the sum of a1) and a2), being referred to the total weight of (a1) and (a2), is 100, the sum of (b1) and (b2), being referred to the total weight of (b1) and (b2), is 100, and the sum of the amounts of (A) and (B) being referred to the total weight of (A) and (B) is 100.

2. The polyolefin compositions according to claim 1 wherein:
Component A component (A) is used in amount ranging from 65 to 95 wt%, more preferably 75 to 95 wt%; and component (B) is used in amount ranging from 5 to 35 wt%, more preferably from 5 to 25 wt%.

3. The polyolefin compositions according to claims 1 or 2 wherein the amount of component a1) ranges from 30 wt% to 70 wt% preferably from 40 wt % to 60 wt based on the sum of a1)+a2).

4. The polyolefin compositions according to anyone of claims 1-3 wherein component (a1) is selected from a propylene based polymer having a propylene content higher than higher than 70 wt%; more preferably higher than 80 wt% and even more preferably higher from 90 to 100wt%.

5. The polyolefin compositions according to anyone of claims 1-4 wherein the amount of component (a2) ranges from 30 wt% to 70 wt% preferably from 40 wt % to 60 wt% more preferably from 45 wt% to 55 wt% based on the sum of (a1)+(a2).

6. The polyolefin compositions according to anyone of claims 1-5 wherein component (a2) is selected from ethylene based polymers having an ethylene content higher than 70 preferably higher than 75 wt%; more preferably higher than 80 wt% even more preferably from 90 wt% to 100%.

7. The polyolefin compositions according to anyone of claims 1-6 wherein component (A) origins from of a waste material containing not less than 80% by weight, typically not less than 90% by weight, in particular from 80% or 90% up to 99% by weight, with respect to the total weight of the component, of polyethylene or polypropylene or their mixtures.

8. The polyolefin compositions according to anyone of claims 1-7 wherein component (b1) is present in an amount from 40 to 60% by weight with respect to component (B) and is selected from propylene homopolymer.

9. The polyolefin compositions according to anyone of claims 1-8 wherein the component (b2) is present in an amount from 40 to 60% by weight with respect to component (B) and is selected from copolymer of ethylene with propylene and/or CH₂=CHR alpha-olefins, where R is a C₂-C₈ alkyl radical, said copolymer containing units derived from ethylene in an amount ranging from 28 to 35% by weight.

10. The polyolefin compositions according to anyone of claims 1-9 wherein polypropylene composition (B) has a Melt Flow Rate (ISO 1133 230°C/2.16 kg) ranging from 0.2 to 2.5 g/10min.

11. The polyolefin compositions according to anyone of claims 1-10 wherein polypropylene composition (B) has an amount of fraction soluble in xylene at room temperature (25°C) ranging from 40 to 55% by weight, said fraction having an intrinsic viscosity measured in tetrahydronaphthalene at 135°C, ranging from 4.0 to 6.5 dl/g.

12. The polyolefin compositions according to anyone of claims 1-11 wherein polypropylene composition (B) has a total content of ethylene measured according to ¹³C-NMR method described in the specification, ranging from 13 to 23% by weight.

13. The polyolefin compositions according to anyone of claims 1-12 wherein Melt Flow Rate (ISO 1133 230°C/2.16 kg) of the whole polyolefin composition ranges from 0.5 to 30 g/10min, preferably from 0.5 to 20 g/10min and especially from 0.5 to 15 g/10min.

14. An extruded or molded article obtained from the polyolefin polymer composition according to any of the preceding claims.

15. An extruded article according to claim 14 being a cast, blown or bioriented films, mono or multilayer.

## Patentansprüche

1. Eine Polyolefin-Zusammensetzung, umfassend:
(A) 60-95 Gew.-% einer Polyolefin-Komponente, die enthält:
- (a1) 20 bis 80 Gew.-% eines Polymers auf Propylenbasis mit einem Propylengehalt von mehr als 60 Gew.-%
- (a2) 20 bis 80 Gew.-% eines Polymers auf Ethylenbasis mit einem Ethylengehalt von mehr als 70 Gew.-%;
(B) 5-40 Gew.-% einer Polypropylen-Zusammensetzung, die Folgendes umfasst:
- (b1) 35 bis 65 Gew.-%, vorzugsweise 40 bis 60 Gew.-%, einer Polymerfraktion, die ein Propylen-Homopolymer oder ein Copolymer aus Propylen mit einem oder mehreren Comonomeren umfasst, die aus Ethylen und einem CH₂=CHR-alpha-Olefin ausgewählt sind, wobei R ein C₂ -C₈ -Alkylrest, oder Mischungen davon; wobei die genannten Copolymere mindestens 85 Gew.-% von Propylen abgeleitete Einheiten enthalten, und
- (b2) 35 bis 65 Gew.-%, vorzugsweise 40 bis 60 Gew.-%, einer Polymerfraktion, die ein Copolymer aus Ethylen mit Comonomeren umfasst, die aus Propylen und CH₂=CHR-alpha-Olefinen ausgewählt sind, wobei R ein C₂ -C₈ -Alkylrest, wobei das Copolymer von Ethylen abgeleitete Einheiten in einer Menge von 25 bis 40 Gew.-%, vorzugsweise von 28 bis 35 Gew.-%, enthält, wobei die Polypropylen-Zusammensetzung (B) ferner **gekennzeichnet ist durch**
- einer Schmelzflussrate (ISO 1133, 230 °C/2,16 kg) im Bereich von 0,1 bis 5 g/10 min, vorzugsweise von 0,2 bis 2,5 g/10 min;
- einem Anteil an bei Raumtemperatur (25 °C) in Xylol löslichen Fraktionen im Bereich von 35 bis 60 Gew.-%, vorzugsweise von 40 bis 55 Gew.-%, wobei diese Fraktion eine in Tetrahydronaphthalin bei 135 °C gemessene intrinsische Viskosität im Bereich von 3,0 bis 7,5, vorzugsweise von 4,0 bis 6,5 dl/g, aufweist; und
- einen Gesamtgehalt an Ethylen, gemessen nach dem in der Beschreibung beschriebenen ¹³-C-NMR-Verfahren, im Bereich von 10 bis 25 Gew.-%, vorzugsweise von 13 bis 23 Gew.-%;
wobei in der genannten Zusammensetzung die Summe aus a1) und a2), bezogen auf das Gesamtgewicht von (a1) und (a2), beträgt 100, die Summe aus (b1) und (b2), bezogen auf das Gesamtgewicht von (b1) und (b2), beträgt 100, und die Summe der Mengen von (A) und (B), bezogen auf das Gesamtgewicht von (A) und (B), beträgt 100.

2. Die Polyolefin-Zusammensetzungen gemäß Anspruch 1, wobei:
Komponente A in einer Menge von 65 bis 95 Gew.-%, vorzugsweise 75 bis 95 Gew.-%, verwendet wird; und Komponente (B) in einer Menge von 5 bis 35 Gew.-%, vorzugsweise von 5 bis 25 Gew.-%, verwendet wird.

3. Die Polyolefin-Zusammensetzungen gemäß Anspruch 1 oder 2, wobei die Menge an Komponente a1) im Bereich von 30 Gew.-% bis 70 Gew.-%, vorzugsweise von 40 Gew.- % bis 60 Gew.-%, bezogen auf die Summe aus a1) und a2), liegt.

4. Die Polyolefin-Zusammensetzungen gemäß einem der Ansprüche 1 bis 3, wobei die Komponente (a1) aus einem Polymer auf Propylenbasis ausgewählt ist, dessen Propylengehalt höher als 70 Gew.-%, vorzugsweise höher als 80 Gew.-% und noch bevorzugter zwischen 90 und 100 Gew.-% beträgt.

5. Die Polyolefin-Zusammensetzungen gemäß einem der Ansprüche 1 bis 4, wobei die Menge an Komponente (a2) im Bereich von 30 Gew.-% bis 70 Gew.-%, vorzugsweise von 40 Gew.-% bis 60 Gew.-% und noch bevorzugter von 45 Gew.-% bis 55 Gew.-%, bezogen auf die Summe aus (a1) und (a2), liegt.

6. Die Polyolefin-Zusammensetzungen gemäß einem der Ansprüche 1 bis 5, wobei die Komponente (a2) aus Ethylen-basierten Polymeren ausgewählt ist, die einen Ethylengehalt von mehr als 70, vorzugsweise mehr als 75 Gew.-%, noch bevorzugter mehr als 80 Gew.- % und am meisten bevorzugt von 90 Gew.-% bis 100 Gew.-% aufweisen.

7. Die Polyolefin-Zusammensetzungen gemäß einem der Ansprüche 1 bis 6, wobei die Komponente (A) aus einem Abfallmaterial stammt, das nicht weniger als 80 Gew.-%, typischerweise nicht weniger als 90 Gew.-%, insbesondere von 80 % oder 90 % bis zu 99 Gew.-%, bezogen auf das Gesamtgewicht der Komponente, an Polyethylen oder Polypropylen oder deren Mischungen enthält.

8. Die Polyolefin-Zusammensetzungen gemäß einem der Ansprüche 1 bis 7, wobei die Komponente (b1) in einer Menge von 40 bis 60 Gew.-%, bezogen auf die Komponente (B), vorliegt und aus einem Propylen-Homopolymer ausgewählt ist.

9. Die Polyolefin-Zusammensetzungen gemäß einem der Ansprüche 1 bis 8, wobei die Komponente (b2) in einer Menge von 40 bis 60 Gew.-%, bezogen auf die Komponente (B), vorliegt und aus einem Copolymer aus Ethylen mit Propylen und/oder CH₂=CHR-α-Olefinen ausgewählt ist, wobei gilt, wobei R ein C₂ -C₈ -Alkylrest ist, wobei das Copolymer von Ethylen abgeleitete Einheiten in einer Menge von 28 bis 35 Gew.-% enthält.

10. Die Polyolefin-Zusammensetzungen gemäß einem der Ansprüche 1 bis 9, wobei die Polypropylen-Zusammensetzung (B) mit der Formel " " einen Schmelzindex (ISO 1133, 230 °C/2,16 kg) im Bereich von 0,2 bis 2,5 g/10 min aufweist.

11. Die Polyolefin-Zusammensetzungen gemäß einem der Ansprüche 1 bis 10, wobei die Poly -Polypropylen-Zusammensetzung (B) einen Anteil an bei Raumtemperatur (25 °C) in Xylol löslichen Fraktionen im Bereich von 40 bis 55 Gew.-% aufweist, wobei die genannte Fraktion eine in Tetrahydronaphthalin bei 135 °C gemessene intrinsische Viskosität im Bereich von 4,0 bis 6,5 dl/g aufweist.

12. Die Polyolefinzusammensetzungen gemäß einem der Ansprüche 1 bis 11, wobei die Polypropylenzusammensetzung (B) einen Gesamtgehalt an Ethylen, gemessen gemäß dem in der Beschreibung beschriebenen ¹³-C-NMR-Verfahren, im Bereich von 13 bis 23 Gewichtsprozent aufweist.

13. Die Polyolefin-Zusammensetzungen gemäß einem der Ansprüche 1 bis 12, wobei die Schmelzflussrate (ISO 1133, 230 °C/2,16 kg) der gesamten Polyolefin-Zusammensetzung im Bereich von 0,5 bis 30 g/10 min, vorzugsweise von 0,5 bis 20 g/10 min und insbesondere von 0,5 bis 15 g/10 min liegt.

14. Ein extrudierter oder geformter Gegenstand, der aus der Polyolefin-Polymerzusammensetzung gemäß einem der vorstehenden Ansprüche hergestellt wurde.

15. Ein extrudiertes Erzeugnis gemäß Anspruch 14, bei dem es sich um eine gegossene, geblasene oder biorientierte Folie handelt, die ein- oder mehrschichtig ist.

## Revendications

1. Une composition de polyoléfine comprenant :
(A) 60 à 95 % en poids d'un composant polyoléfinique contenant :
- (a1) de 20 % à 80 % en poids d'un polymère à base de propylène présentant une teneur en propylène supérieure à 60 % en poids
- (a2) de 20 % en poids à 80 % en poids d'un polymère à base d'éthylène présentant une teneur en éthylène supérieure à 70 % en poids ;
(B) 5 à 40 % en poids d'une composition de polypropylène comprenant :
- (b1) de 35 à 65 % en poids, de préférence de 40 à 60 % en poids, d'une fraction polymère comprenant un homopolymère de propylène, ou un copolymère de propylène avec un ou plusieurs comonomères choisis parmi l'éthylène et une alpha-oléfine de formule CH₂=CHR, où R est un radical alkyle en C₂ -C₈ , ou des mélanges de ceux-ci ; lesdits copolymères contenant au moins 85 % en poids de motifs dérivés du propylène, et
- (b2) de 35 à 65 % en poids, de préférence de 40 à 60 % en poids, d'une fraction polymère comprenant un copolymère d'éthylène avec des comonomères choisis parmi le propylène et les alpha-oléfines de formule CH₂=CHR, où R représente un radical alkyle en C₂ -C₈ radical alkyle, ledit copolymère contenant des motifs dérivés de l'éthylène en une quantité comprise entre 25 et 40 % en poids, de préférence entre 28 et 35 % en poids, ladite composition de polypropylène (B) étant en outre **caractérisée par**
- un indice de fluidité à chaud (ISO 1133, 230 °C/2,16 kg) compris entre 0,1 et 5 g/10 min, de préférence entre 0,2 et 2,5 g/10 min ;
- une teneur en fraction soluble dans le xylène à température ambiante (25 °C) comprise entre 35 et 60 % en poids, de préférence entre 40 et 55 % en poids, ladite fraction présentant une viscosité intrinsèque, mesurée dans le tétrahydronaphtalène à 135 °C, comprise entre 3,0 et 7,5, de préférence entre 4,0 et 6,5 dl/g ; et,
- une teneur totale en éthylène, mesurée selon la méthode de RMN¹³C décrite dans le mémoire descriptif, comprise entre 10 et 25 % en poids, de préférence entre 13 et 23 % en poids ;
dans ladite composition, la somme de a1) et a2), rapportée au poids total de (a1) et (a2), est égale à 100, la somme de (b1) et (b2), rapportée au poids total de (b1) et (b2), est égale à 100, et la somme des quantités de (A) et (B), rapportée au poids total de (A) et (B), est égale à 100.

2. Les compositions de polyoléfines selon la revendication 1, dans lesquelles :
le composant (A) est utilisé en une quantité comprise entre 65 et 95 % en poids, de préférence entre 75 et 95 % en poids ; et le composant (B) est utilisé en une quantité comprise entre 5 et 35 % en poids, de préférence entre 5 et 25 % en poids.

3. Compositions de polyoléfines selon les revendications 1 ou 2, dans lesquelles la quantité du composant a1) est comprise entre 30 % et 70 % en poids, de préférence entre 40 % et 60 % en poids, par rapport à la somme de a1) et a2).

4. Compositions de polyoléfines selon l'une quelconque des revendications 1 à 3, dans lesquelles le composant (a1) est choisi parmi un polymère à base de propylène présentant une teneur en propylène supérieure à 70 % en poids ; de préférence supérieure à 80 % en poids et, de manière encore plus préférable, comprise entre 90 et 100 % en poids.

5. Compositions de polyoléfines selon l'une quelconque des revendications 1 à 4, dans lesquelles la quantité du composant (a2) est comprise entre 30 % en poids et 70 % en poids, de préférence entre 40 % en poids et 60 % en poids, et plus préférablement entre 45 % en poids et 55 % en poids, par rapport à la somme de (a1) + (a2).

6. Les compositions de polyoléfines selon l'une quelconque des revendications 1 à 5, dans lesquelles le composant (a2) est choisi parmi les polymères à base d'éthylène ayant une teneur en éthylène supérieure à 70 %, de préférence supérieure à 75 % en poids ; de manière plus préférentielle supérieure à 80 % en poids ; et de manière encore plus préférentielle comprise entre 90 % et 100 % en poids.

7. Les compositions de polyoléfines selon l'une quelconque des revendications 1 à 6, dans lesquelles le composant (A) provient d'un déchet contenant au moins 80 % en poids, typiquement au moins 90 % en poids, en particulier de 80 % ou 90 % jusqu'à 99 % en poids, par rapport au poids total du composant, de polyéthylène ou de polypropylène ou de leurs mélanges.

8. Compositions de polyoléfines selon l'une quelconque des revendications 1 à 7, dans lesquelles le composant (B1) est présent en une quantité comprise entre 40 et 60 % en poids par rapport au composant (B) et est choisi parmi l'homopolymère de propylène.

9. Compositions de polyoléfines selon l'une quelconque des revendications 1 à 8, dans lesquelles le composant (b2) est présent en une quantité comprise entre 40 et 60 % en poids par rapport au composant (B) et est choisi parmi les copolymères d'éthylène avec du propylène et/ou des alpha-oléfines de type CH₂=CHR, , où R est un radical alkyle en C₂ à C₈ , ledit copolymère contenant des motifs dérivés de l'éthylène en une quantité comprise entre 28 et 35 % en poids.

10. Compositions de polyoléfines selon l'une quelconque des revendications 1 à 9, dans lesquelles la composition de polypropylène (B) de formule présente un indice de fluidité à chaud (ISO 1133, 230 °C/2,16 kg) compris entre 0,2 et 2,5 g/10 min.

11. Compositions de polyoléfines selon l'une quelconque des revendications 1 à 10, dans lesquelles la composition de polypropylène d' s (B) présente une quantité de fraction soluble dans le xylène à température ambiante (25 °C) comprise entre 40 et 55 % en poids, ladite fraction ayant une viscosité intrinsèque, mesurée dans le tétrahydronaphtalène à 135 °C, comprise entre 4,0 et 6,5 dl/g.

12. Compositions de polyoléfines selon l'une quelconque des revendications 1 à 11, dans lesquelles la composition de polypropylène (B) présente une teneur totale en éthylène, mesurée selon la méthode de RMN C-N décrite au paragraphe ¹³du mémoire descriptif, comprise entre 13 et 23 % en poids.

13. Compositions de polyoléfines selon l'une quelconque des revendications 1 à 12, dans lesquelles l'indice de fluidité à chaud (ISO 1133, 230 °C/2,16 kg) de l'ensemble de la composition de polyoléfines est compris entre 0,5 et 30 g/10 min, de préférence entre 0,5 et 20 g/10 min et en particulier entre 0,5 et 15 g/10 min.

14. Article extrudé ou moulé obtenu à partir de la composition polymère de polyoléfine selon l'une quelconque des revendications précédentes.

15. Article extrudé selon la revendication 14, sous forme de films coulés, soufflés ou biorientés, mono ou multicouches.
